(19) Europäisches Patentamt / European Patent Office / Office européen des brevets

(11) **EP 2 461 333 B1**

(12) **EUROPEAN PATENT SPECIFICATION**

(45) Date of publication and mention of the grant of the patent: **14.12.2016 Bulletin 2016/50**

(21) Application number: **10804323.3**

(22) Date of filing: **22.07.2010**

(51) Int Cl.:
***H01B 1/06*** *(2006.01)*
***C08F 16/38*** *(2006.01)*
***C25B 13/04*** *(2006.01)*
***H01M 4/86*** *(2006.01)*
***C08F 216/14*** *(2006.01)*
***H01B 1/12*** *(2006.01)*
***H01M 8/1023*** *(2016.01)*
***H01M 8/1039*** *(2016.01)*
***H01M 8/1048*** *(2016.01)*
***H01M 8/1051*** *(2016.01)*
***H01M 8/106*** *(2016.01)*
***H01M 8/1081*** *(2016.01)*

(86) International application number: **PCT/JP2010/062380**

(87) International publication number: **WO 2011/013577 (03.02.2011 Gazette 2011/05)**

(54) **ELECTROLYTE MATERIAL, LIQUID COMPOSITION, AND MEMBRANE ELECTRODE ASSEMBLY FOR SOLID POLYMER FUEL CELLS**

ELEKTROLYTMATERIAL, FLÜSSIGZUSAMMENSETZUNG UND MEMBRAN-ELEKTRODEN-ANORDNUNG FÜR FESTPOLYMERBRENNSTOFFZELLEN

MATÉRIAU ÉLECTROLYTIQUE, COMPOSITION LIQUIDE ET ENSEMBLE À ÉLECTRODES MEMBRANES POUR PILES À COMBUSTIBLE À POLYMÈRE SOLIDE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **31.07.2009 JP 2009179065**

(43) Date of publication of application: **06.06.2012 Bulletin 2012/23**

(73) Proprietor: **Asahi Glass Company, Limited**
**Tokyo 100-8405 (JP)**

(72) Inventors:
- **HOMMURA, Satoru**
  **Tokyo 100-8405 (JP)**
- **SAITO, Susumu**
  **Tokyo 100-8405 (JP)**
- **SHIMOHIRA, Tetsuji**
  **Tokyo 100-8405 (JP)**
- **WATAKABE, Atsushi**
  **Tokyo 100-8405 (JP)**

(74) Representative: **Müller-Boré & Partner Patentanwälte PartG mbB**
**Friedenheimer Brücke 21**
**80639 München (DE)**

(56) References cited:
**WO-A1-2004/097851**
**WO-A1-2005/096422**
**JP-A- 2006 152 249**
**JP-A- 2008 177 167**
**JP-A- 2009 040 909**
**US-A1- 2005 266 291**
**US-A1- 2006 099 476**
**US-A1- 2008 014 490**
**US-A1- 2008 275 147**
**US-A1- 2009 004 527**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 461 333 B1

## Description

### TECHNICAL FIELD

The present invention relates to an electrolyte material for a polymer electrolyte fuel cell, a liquid composition comprising the electrolyte material, and a membrane/electrode assembly for a polymer electrolyte fuel cell containing the electrolyte material in a catalyst layer.

### BACKGROUND ART

As an electrolyte material contained in a catalyst layer of a membrane/electrode assembly for a polymer electrolyte fuel cell, the following polymer (1) has been known.

A polymer (1) having sulfonic acid groups ($-SO_3H$ groups) converted from $-SO_2F$ groups in a polymer having repeating units based on a compound represented by the. following formula (m3) and repeating units based on tetrafluoroethylene (hereinafter referred to as TFE):

$$CF_2=CF(OCF_2CF_2)_mO_p(CF_2)_nSO_2F \qquad (m3)$$

wherein Z is a fluorine atom or a trifluoromethyl group, m is an integer of from 0 to 3, p is 0 or 1, and n is from 1 to 12, provided that m+p>0.

A polymer electrolyte fuel cell is required to be operated under low humidity conditions where the relative humidity of the reaction gas (fuel gas and oxidant gas) is low, or under no humidity conditions, and under high temperature conditions (at least 90°C), in order to simplify the fuel cell system or to reduce the cost. Therefore, as the electrolyte material also, a material excellent in the power generation performance under low or no humidity conditions, and even under high temperature conditions, which will replace the polymer (1), is required. Particularly, the electrolyte material for a catalyst layer is important since it greatly influences the electrode performance.

As the electrolyte material other than the polymer (1), a polymer having a cyclic structure in its molecule has been known. It may, for example, be a polymer (2) having sulfonic acid groups ($-SO_3H$ groups) converted from $-SO_2F$ groups in a polymer having repeating units based on a perfluoromonomer having a $-SO_2F$ group and a dioxolane ring and repeating units based on a perfluoromonomer having no $-SO_2F$ group and having a dioxolane ring (Patent Document 1).

A polymer electrolyte fuel cell employing the polymer (2) as the electrolyte material of the catalyst layer has an improved open-circuit voltage under common high humidity conditions at a cell voltage of 70°C under a humidity of 100%RH, as compared with one employing the polymer (1), and an improvement in its electrode performance is confirmed. However, the power generation performance under low humidity conditions under a humidity of at most 30%RH or under no humidity conditions has not been verified.

Further, in order to obtain high performance under low or no humidity conditions, it is effective to increase the ion exchange capacity of the electrolyte material of the catalyst layer. However, by merely increasing the ion exchange capacity of the electrolyte material, the water content (water absorptivity) of the electrolyte material will be drastically increased. Accordingly, under high humidity conditions where the relative humidity of the reaction gas is high, flooding is likely to occur, whereby the power generation characteristics tend to be decreased. Particularly, a polymer having a cyclic structure in its molecule tends to have a high water content as compared with the polymer (1), and it is difficult to sufficiently obtain characteristics of the electrolyte material.

### PRIOR ART DOCUMENT

### PATENT DOCUMENT

Patent Document 1: WO2004/097851

### DISCLOSURE OF INVENTION

### TECHNICAL PROBLEM

The present invention provides a membrane/electrode assembly excellent in the power generation characteristics under low or no humidity conditions and under high humidity conditions; an electrolyte material having a low water content, suitable for a catalyst layer of the membrane/electrode assembly; and a liquid composition suitable for formation of a catalyst layer in the membrane/electrode assembly.

SOLUTION TO PROBLEM

The electrolyte material of the present invention comprises a polymer (H) having ion exchange groups converted from precursor groups in the following polymer (F):

polymer (F): a polymer which has repeating units (A) based on a perfluoromonomer having a precursor group of an ion exchange group and a 5-membered ring to which the precursor group is bonded and repeating units (B) represented by the following formula (u2), and which has an intrinsic viscosity of at least 0.3 dL/g:

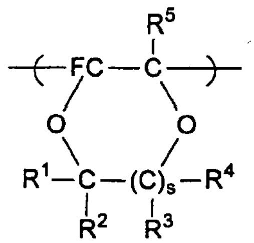

(u2)

wherein s is 0 or 1, each of $R^1$ and $R^2$ which are independent of each other, is a fluorine atom or a $C_{1-5}$ perfluoroalkyl group or they are bonded to form a spiro ring (provided that when s is 0), each of $R^3$ and $R^4$ which are independent of each other, is a fluorine atom or a $C_{1-5}$ perfluoroalkyl group, and $R^5$ is a fluorine atom, a $C_{1-5}$ perfluoroalkyl group or a $C_{1-5}$ perfluoroalkoxy group.

The ion exchange groups of the polymer (H) are groups represented by the following formula (g1):

$$-(SO_2X(SO_2R^f)_a)M^+ \qquad (g1)$$

wherein $M^+$ is $H^+$, $R^f$ is a linear or branched perfluoroalkyl group which may have an etheric oxygen atom, and X is an oxygen atom, a nitrogen atom or a carbon atom, provided that when X is an oxygen atom, a=0, when X is a nitrogen atom, a=1, and when X is a carbon atom, a=2. Repeating units having ion exchange groups converted from the precursor groups in the repeating units (A) are repeating units represented by the following formula (u11):

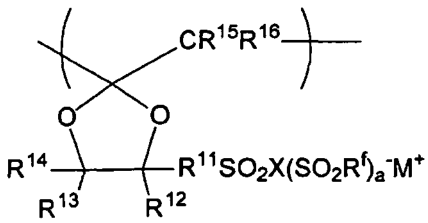

(u11)

wherein R" is a bivalent perfluoroorganic group which may have an etheric oxygen atom, each of $R^{12}$, $R^{13}$, $R^{15}$ and $R^{16}$ which are independent of one another, is a monovalent perfluoroorganic group which may have an etheric oxygen atom, or a fluorine atom, and $R^{14}$ is a monovalent perfluoroorganic group which may have an etheric oxygen atom. a fluorine atom. or a $-R^{11}(SO_2X(SO_2R^f)_a{}^-M^+$ group. Repeating units (u11) are not according to the invention as claimed in claim 1.

It is preferred that $R^{15}$ and $R^{16}$ in the above formula (u11) are a fluorine atom.

It is preferred that $M^+$ in the above formula (u11) is $H^+$.

It is preferred that at least one type of the repeating units represented by the above formula (u11) are repeating units represented by the following formula (u11-1):

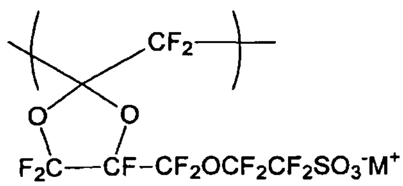

(u11-1)

At least one type of the repeating units having ion exchange groups converted from the precursor groups in the repeating units (A) are repeating units represented by the following formula (u12):

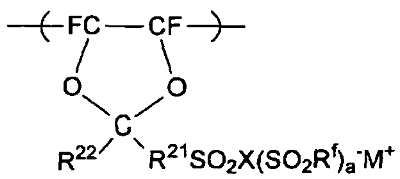

(u12)

wherein $R^{21}$ is a $C_{1-6}$ perfluoroalkylene group or a $C_{2-6}$ perfluoroalkylene group having an etheric oxygen atom between the carbon-carbon bond, $R^{22}$ is a fluorine atom, a $C_{1-6}$ perfluoroalkyl group, a $C_{2-6}$ perfluoroalkyl group having an etheric oxygen atom between the carbon-carbon bond or a $-R^{21}(SO_2X(SO_2R^f)_a{}^-M^+$ group.

$M^+$ in the above formula (u12) is $H^+$. At least one type of the repeating units represented by the above formula (u12) are repeating units represented by the following formula (u12-1):

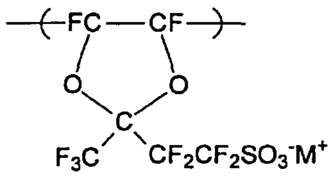

(u12-1)

or they are repeating units represented by the following formula (u12-2):

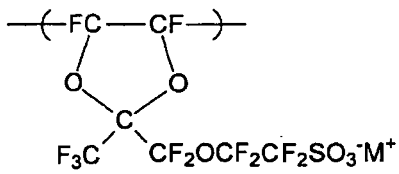

(u12-2)

It is preferred that $R^5$ in the above formula (u2) is a fluorine atom.

It is preferred that at least one type of the repeating units represented by the above formula (u2) are repeating units represented by the following formula (u2-1):

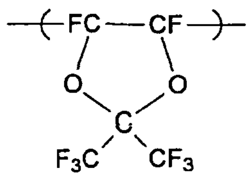

(u2-1)

The above polymer (F) may further have repeating units based on TFE.

The liquid composition of the present invention comprises a dispersion medium and the electrolyte material of the present invention dispersed in the dispersion medium, wherein the dispersion medium contains an organic solvent having a hydroxy group.

The membrane/electrode assembly for a polymer electrolyte fuel cell of the present invention comprises an anode having a catalyst layer containing a proton conductive polymer, a cathode having a catalyst layer containing a proton conductive polymer, and a polymer electrolyte membrane disposed between the anode and the cathode, wherein the proton conductive polymer contained in the catalyst layer of at least one of the cathode and the anode is the electrolyte material of the present invention.

## ADVANTAGEOUS EFFECTS OF INVENTION

The membrane/electrode assembly of the present invention is excellent in the power generation characteristics under low or no humidity conditions and under high humidity conditions.

The electrolyte material of the present invention is suitable for a catalyst layer of a polymer/electrode assembly. Further, it has a low water content.

The liquid composition of the present invention is suitable for formation of a catalyst layer of the membrane/electrode assembly of the present invention.

BRIEF DESCRIPTION OF DRAWINGS

Fig. 1 is a cross section illustrating one example of a membrane/electrode assembly of the present invention.
Fig. 2 is a cross section illustrating another example of a membrane/electrode assembly of the present invention.

DESCRIPTION OF EMBODIMENTS

In the present specification, repeating units represented by the formula (u11) will be referred to as units (u11). The same applies to repeating units represented by other formulae.
Further, in the present specification, a compound represented by the formula (m11) will be referred to as a compound (m11). The same applies to compounds represented by other formulae.
Further, in the present specification, a group represented by the formula (g1) will be referred to as a group (g1). The same applies to groups represented by other formulae.
In the present invention, repeating units mean units derived from a monomer formed by polymerization of the monomer. The repeating units may be units directly formed by the polymerization reaction, or may be units having part of the units converted to another structure by treating the polymer.
Further, a monomer is a compound having a polymerizable carbon-carbon double bond.
Further, an ion exchange group is a group having $H^+$, a monovalent metal cation, an ammonium ion or the like. The ion exchange group may, for example, be a group (g1) described hereinafter.
Further, a precursor group is a group capable of being converted to an ion exchange group by a known treatment such as hydrolysis or treatment for conversion to an acid form. Such a precursor group may, for example, be a $-SO_2F$ group.

<Electrolyte material>

The electrolyte material of the present invention comprises a polymer (H) having ion exchange groups converted from precursor groups in a polymer (F).

(Polymer (F))

The polymer (F) is a polymer having specific repeating units (A) and specific repeating units (B), and as the case requires, other repeating units (C). Repeating units (A):

Repeating units (A) are repeating units based on a perfluoromonomer (hereinafter sometimes referred to as a monomer (a)) having a precursor group of an ion exchange group and a 5-membered ring to which the precursor group is bonded.

A 5-membered ring is a cyclic perfluoroorganic group which may have one or two etheric oxygen atoms.
A polymerizable carbon-carbon double bond in the monomer (a) may be constituted by two adjacent carbon atoms constituting the 5-membered ring, may be constituted by one carbon atom constituting the 5-membered ring and one carbon atom adjacent thereto, present outside the 5-membered ring, or may be constituted by two adjacent carbon atoms present outside the 5-membered ring. The polymerizable carbon-carbon double bond constituted by two adjacent carbon atoms present outside the 5-membered ring may be bonded to the 5-membered ring by means of a bivalent perfluoroorganic group which may have an etheric oxygen atom (e.g. a perfluoroalkylene group which may have an etheric oxygen atom).
The precursor group may be directly bonded to the 5-membered ring, or may be bonded by means of a bivalent perfluoroorganic group which may have an etheric oxygen atom (e.g. a perfluoroalkylene group which may have an etheric oxygen atom).
The monomer (a) is the compound (m12) in view of a high effect of improving the electrode performance of the polymer.
Compound (m11) is easily prepared but not according to the invention.

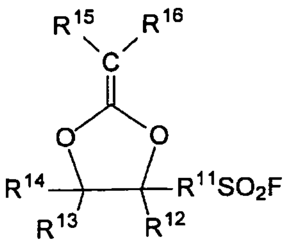

(m11)

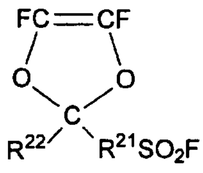

(m12)

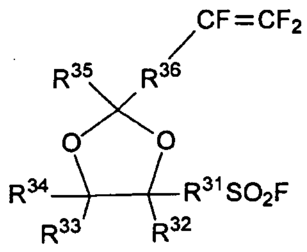

(m13)

$R^{11}$ is a bivalent perfluoroorganic group which may have an etheric oxygen atom. The organic group is a group having at least one carbon atom. The bivalent perfluoroorganic group is preferably a perfluoroalkylene group. In a case where the perfluoroalkylene group has an etheric oxygen atom, it may have one or more such oxygen atoms. Further, such an oxygen atom may be inserted between the carbon-carbon bond of the perfluoroalkylene group, or may be inserted at the terminal of the carbon atom bond. The perfluoroalkylene group may be linear or branched, and is preferably linear.

Each of $R^{12}$, $R^{13}$, $R^{15}$ and $R^{16}$ which are independent of one another, is a monovalent perfluoroorganic group which may have an etheric oxygen atom, or a fluorine atom. The monovalent perfluoroorganic group is preferably a perfluoroalkyl group. It is preferred that at least one of $R^{15}$ and $R^{16}$ is a fluorine atom, and it is more preferred that both are a fluorine atom, in view of high polymerizability.

$R^{14}$ is a monovalent perfluoroorganic group which may have an etheric oxygen atom, a fluorine atom or a $-R^{11}SO_2F$ group.

The monovalent perfluoroorganic group is preferably a perfluoroalkyl group. In a case where the perfluoroalkyl group has an etheric oxygen atom, it may have one or more such oxygen atoms. Further, such an oxygen atom may be inserted between the carbon-carbon bond of the perfluoroalkyl group, or may be inserted at the terminal of the carbon atom bond. The perfluoroalkyl group may be linear or branched, and is preferably linear. In a case where the compound (m11) has two $R^{11}$'s, such $R^{11}$'s may be the same groups or may be different groups.

$R^{21}$ is a $C_{1-6}$ perfluoroalkylene group or a $C_{2-6}$ perfluoroalkylene group having an etheric oxygen atom between the carbon-carbon bond. In a case where the perfluoroalkylene group has an etheric oxygen atom, it may have one or more such oxygen atoms. The perfluoroalkylene group may be linear or branched, and is preferably linear.

$R^{22}$ is a fluorine atom, a $C_{1-6}$ perfluoroalkyl group, a $C_{2-6}$ perfluoroalkyl group having an etheric oxygen atom between the carbon-carbon bond, or a $-R^{21}(SO_2X(SO_2R^f)_a)^-M^+$ group. In a case where the perfluoroalkyl group has an etheric oxygen atom, it may have one or more such oxygen atoms. The perfluoroalkyl group may be linear or branched, and is preferably linear. In a case where the compound (m12) has two $R^{21}$'s, such $R^{21}$'s may be the same groups or may be different groups.

$R^{31}$ is a $C_{1-6}$ perfluoroalkylene group or a $C_{2-6}$ perfluoroalkylene group having an etheric oxygen atom between the carbon-carbon bond. In a case where the perfluoroalkylene group has an etheric oxygen atom, it may have one or more such oxygen atoms. The perfluoroalkylene group may be linear or branched, and is preferably linear.

Each of $R^{32}$ to $R^{35}$ is a fluorine atom, a $C_{1-6}$ perfluoroalkyl group or a $C_{2-6}$ perfluoroalkyl group having an etheric oxygen atom between the carbon-carbon bond. In a case where the perfluoroalkyl group has an etheric oxygen atom, it may have one or more such oxygen atoms. The perfluoroalkyl group may be linear or branched, and is preferably linear.

$R^{36}$ is a single bond, a $C_{1-6}$ perfluoroalkylene group or a $C_{2-6}$ perfluoroalkylene group having an etheric oxygen atom between the carbon-carbon bond. In a case where the perfluoroalkylene group has an etheric oxygen atom, it may have one or more such oxygen atoms. The perfluoroalkylene group may be linear or branched, and is preferably linear.

The compound (m11), which is not according to the invention, may, for example, be compounds (m11-1) to (m11-4), and is particularly preferably the compound (m11-1) in view of easiness of preparation and high polymerizability.

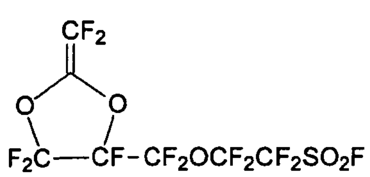

(m11-1)

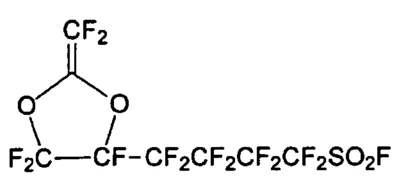

(m11-2)

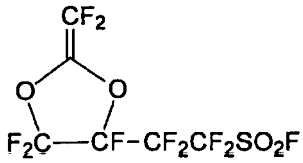

(m11-3)

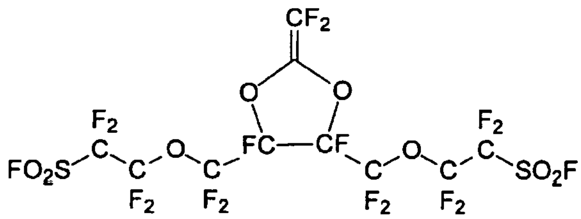

(m11-4)

The compound (m12) may, for example, be a compound (m12-1) or a compound (m12-2).

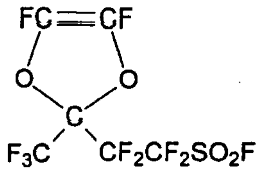

(m12-1)

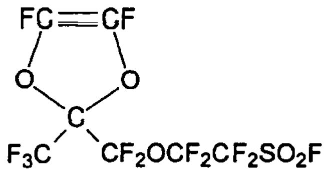

(m12-2)

The compound (m13), which is not according to the invention, may, for example, be a compound (m13-1) or a compound (m13-2).

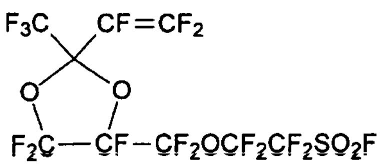

(m13-1)

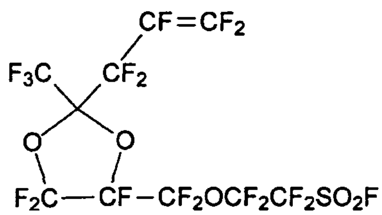

(m13-2)

The compound (m11) can be prepared by a method disclosed in WO2003/037885, JP-A-2005-314388, JP-A-2009-040909, etc.
The compound (m12) can be prepared by a method disclosed in JP-A-2006-152249, etc.
The compound (m13) can be prepared by a method disclosed in JP-A-2006-241302, etc.
Repeating units (B):

Repeating units (B) are repeating units based on a perfluoromonomer (hereinafter sometimes referred to as a monomer (b)) capable of constituting repeating units represented by the formula (u2).

The monomer (b) may be a compound (m2).

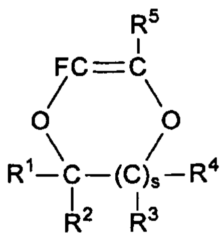

(m2)

s is 0 or 1.
Each of $R^1$ and $R^2$ which are independent of each other, is a fluorine atom or a $C_{1-5}$ perfluoroalkyl group, or they are bonded to form a spiro ring (provided that when s is 0).
Each of $R^3$ and $R^4$ which are independent of each other, is a fluorine atom or a $C_{1-5}$ perfluoroalkyl group.
$R^5$ is a fluorine atom, a $C_{1-5}$ perfluoroalkyl group or a $C_{1-5}$ perfluoroalkoxy group. $R^5$ is preferably a fluorine atom in view of high polymerizability.
Each of the perfluoroalkyl group and the perfluoroalkoxy group may be linear or branched, and is preferably

linear.

The compound (m2) may, for example, be compounds (m2-1) to (m2-11), and is particularly preferably the compound (m2-1) in view of a high effect of improving the electrode performance of the polymer.

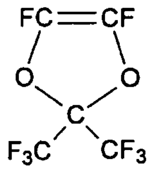
(m2-1)

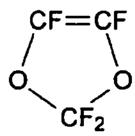
(m2-2)

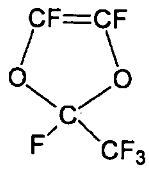
(m2-3)

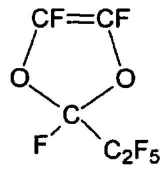
(m2-4)

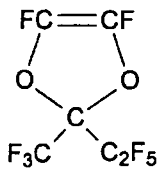
(m2-5)

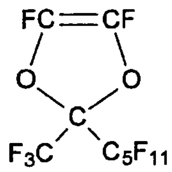
(m2-6)

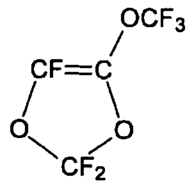
(m2-7)

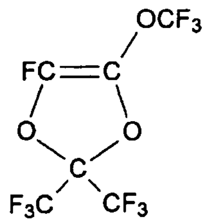
(m2-8)

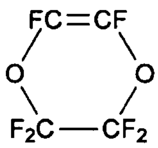
(m2-9)

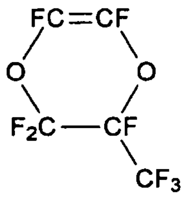
(m2-10)

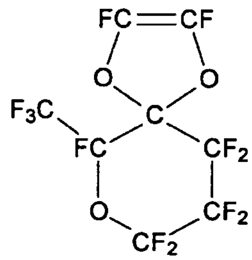
(m2-11)

The compound (m2) can be prepared by a method disclosed in Macromolecule, vol. 26, No. 22, 1993, p. 5829-5834, or JP-A-6-92957.

Other repeating units (C):

Other repeating units (C) are repeating units based on a monomer (hereinafter sometimes referred to as a monomer (c)) other than the monomer (a) and the monomer (b).

The monomer (c) may, for example, be TFE, chlorotrifluoroethylene, trifluoroethylene, vinylidene fluoride, vinyl fluoride, ethylene, propylene, perfluoro(3-butenyl vinyl ether), perfluoro(allyl vinyl ether), a perfluoro $\alpha$-olefin (such as hexafluoropropylene), a (perfluoroalkyl)ethylene (such as (perfluorobutyl)ethylene), a (perfluoroalkyl)propene (such as 3-perfluorooctyl-1-propene) or a perfluoro(alkyl vinyl ether). The monomer (c) is particularly preferably TFE. TFE, which has high crystallinity, has an effect of suppressing swelling when the polymer (H) contains water, and can reduce the water content of the polymer (H).

As the monomer (c), a perfluoromonomer (hereinafter sometimes referred to as a monomer (c')) having no ion exchange group nor its precursor group, having a dioxolane ring and having one polymerizable carbon-carbon double bond may be used.

Such a monomer (c') is preferably a compound (m51) in view of high polymerizability.

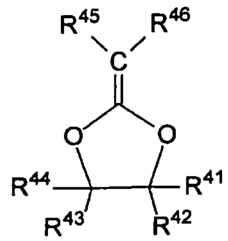

(m51)

Each of $R^{41}$ to $R^{46}$ which are independent of one another, is a monovalent perfluoroorganic group which may have an etheric oxygen atom, or a fluorine atom. The monovalent perfluoroorganic group is preferably a perfluoroalkyl group. In a case where the perfluoroalkyl group has an etheric oxygen atom, it may have one or more such oxygen atoms. Further, such an oxygen atom may be inserted between the carbon-carbon bond of the perfluoroalkyl group, or may be inserted at the terminal of the carbon atom bond. The perfluoroalkyl group may be linear or branched, and is preferably linear.

It is preferred that at least one of $R^{45}$ and $R^{46}$ is a fluorine atom, and it is more preferred that both of them are a fluorine atom, in view of high polymerizability.

The compound (m51) may, for example, be a compound (m51-1) or a compound (m51-2), and is particularly preferably the compound (m51-1) in view of easiness of preparation and high polymerizability.

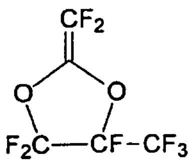

(m51-1)

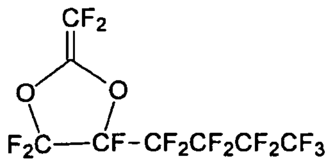

(m51-2)

Further, as the monomer (c), a perfluoromonomer (hereinafter sometimes referred to as a monomer (c")) having two or more polymerizable carbon-carbon double bonds may also be used. By use of the monomer (c"), the intrinsic viscosity of the polymer (F) can be increased, and an effect of suppressing the water content of the polymer (H) can be obtained.

The monomer (c") may, for example, be a compound (m52) or a compound (m53).

$CF_2=CF-Q^1-CF=CF_2$ (m52)

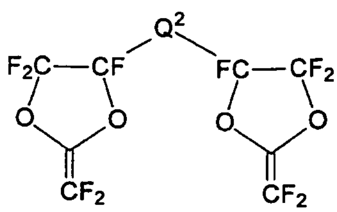

(m53)

$Q^1$ is an oxygen atom or a linear or branched perfluoroalkylene group which may have an etheric oxygen atom.

$Q^2$ is a single bond, an oxygen atom, or a $C_{1-10}$ perfluoroalkylene group which may have an etheric oxygen atom.

The compound (m52) is preferably compounds (m52-1) to (m52-3) in view of easiness of preparation.

$CF_2=CFOCF=CF_2$ (m52-1),

$CF_2=CFO(CF_2)_hOCF=CF_2$ (m52-2),

$CF_2=CF[OCF_2CF(CF_3)]k_iO(CF_2)_k[OCF(CF_3)CF_2]_jOCF=CF_2$ (m52-3).

wherein each of h and k is an integer of from 2 to 8, and each of i and j which are independent of each other, is an integer of from 0 to 5, provided that i+j≧1.

The compound (m53) is preferably compounds (m53-1) to (m53-6) in view of easiness of preparation and high polymerizability.

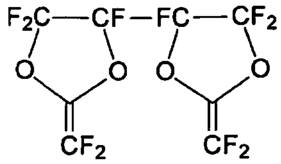

(m53-1)

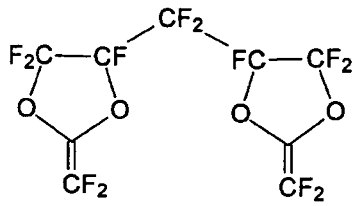

(m53-2)

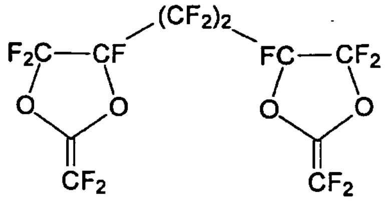

(m53-3)

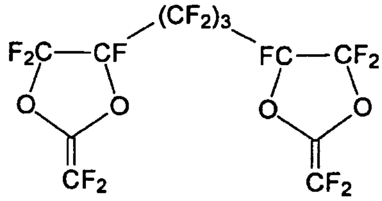

(m53-4)

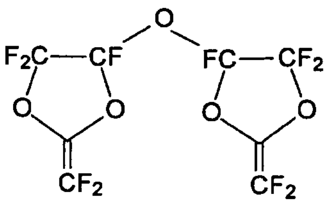

(m53-5)

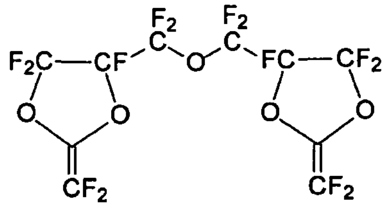

(m53-6)

The amount of addition of the monomer (c") is preferably from 0.001 to 20 mol% based on 100 mol% of all the monomers (the total of the monomer (a), the monomer (b) and the monomer (c)) constituting the polymer (F). If it is less than 0.001 mol%, no sufficient effect of increasing the molecular weight will be obtained, and if it is larger than 20 mol%, production of the polymer (F) will be difficult due to the difference of the reactivity with the monomer (a) and the monomer (b).

Intrinsic viscosity:

The intrinsic viscosity of the polymer (F) is at least 0.3 dUg, preferably from 0.3 to 2.0 dUg, more preferably from 0.4 to 1.0 dUg. When the intrinsic viscosity is at least 0.3 dL/g, the increase in the water content of the polymer (H) will be suppressed even when the ion exchange capacity of the polymer (H) is increased, and accordingly when the polymer (H) is used as an electrolyte material of a catalyst layer of a polymer electrolyte fuel cell, flooding in the catalyst layer will be suppressed.

The intrinsic viscosity of a polymer is defined as follows and is an index for the molecular weight of the polymer.

$$[\eta] = \lim_{c \to 0} \frac{(\eta / \eta_0) - 1}{c}$$

wherein [n] is the intrinsic viscosity, $\eta$ is the viscosity of a polymer solution, $\eta_0$ is the viscosity of a solvent, and c is the concentration of the polymer solution.

A method of adjusting the intrinsic viscosity of the polymer (F) to be at least 0.3 dL/g, may, for example, be a method (i) of adjusting the polymerization conditions, or a method (ii) of adding the compound (c") at the time of polymerization.

In the method (i), it is important to suppress the chain transfer at the time of the polymerization. Specifically, it is preferred to employ, as the polymerization method, bulk polymerization employing no solvent. In a case of carrying out solution polymerization, it is effective to use a solvent with small chain transfer properties. It is preferred to use, as

a radical initiator, a radical initiator with small chain transfer properties, particularly a radical initiator comprising a perfluoro compound. Further, in order to reduce termination by coupling by the radical initiator, it is also effective to reduce the amount of the radical initiator relative to the monomers.

In the method (ii), as described above, the intrinsic viscosity can be increased by adding the compound (c'').

Production of polymer (F):

The polymer (F) is produced by polymerizing the monomer (a) and the monomer (b) and as the case requires, the monomer (c).

As the polymerization method, a known polymerization method may be mentioned such as a bulk polymerization method, a solution polymerization method, a suspension polymerization method or an emulsion polymerization method. Otherwise, polymerization may be carried out in liquid or supercritical carbon dioxide.

The polymerization is carried out under a condition to form radicals. The method to form radicals may, for example, be a method of applying a radiation such as ultraviolet rays, y-rays or electron beams, or a method of adding a radical initiator.

The polymerization temperature is usually from 10 to 150°C.

The radical initiator may, for example, be a bis(fluoroacyl) peroxide, a bis(chlorofluoroacyl) peroxide, a dialkyl peroxy dicarbonate, a diacyl peroxide, a peroxy ester, an azo compound or a persulfate, and a perfluoro compound such as bis(fluoroacyl) peroxide is preferred from such a viewpoint that the polymer (F) substantially free from unstable terminal groups is thereby obtainable.

A solvent to be used for the solution polymerization method is preferably a solvent having a boiling point of from 20 to 350°C, more preferably a solvent having a boiling point of from 40 to 150°C. Such a solvent may, for example, be a perfluorotrialkylamine (such as perfluorotributylamine), a perfluorocarbon (such as perfluorohexane or perfluorooctane), a hydrofluorocarbon (such as 1H,4H-perfluorobutane or 1 H-perfluorohexane), a hydrochlorofluorocarbon (such as 3,3-dichloro-1,1,1,2,2-pentafluoropropane or 1,3-dichloro-1,1,2,2,3-pentafluoropropane), or a hydrofluoroether (such as $CF_3CH_2OCF_2CF_2H$).

In the solution polymerization method, monomers, a radical initiator, etc. are added to a solvent, and radicals are formed in the solvent to carry out polymerization of the monomers. The addition of the monomers and the initiator may be all at once, sequentially or continuously.

In the suspension polymerization method, water is used as a dispersion medium, and in the dispersion medium, monomers, a non-ionic radical initiator, etc. are added to let radicals form in the dispersion medium thereby to carry out polymerization of the monomers.

The non-ionic radical initiator may, for example, be a bis(fluoroacyl) peroxide, a bis(chlorofluoroacyl) peroxide, a dialkylperoxy dicarbonate, a diacyl peroxide, a peroxy ester, a dialkyl peroxide, a bis(fluoroalkyl) peroxide or an azo compound.

To the dispersion medium, the above-mentioned solvent; a surfactant as a dispersion stabilizer to prevent agglomeration of suspended particles; a hydrocarbon compound (such as hexane or methanol) as a molecular-weight controlling agent, etc., may be added as assisting agents.

(Polymer (H))

The polymer (H) is a polymer having ion exchange groups converted from precursor groups in the polymer (F), and is a polymer having specific repeating units (A') and specific repeating units (B) and as the case requires, other repeating units (C). Repeating units (A'):

Repeating units (A') are repeating units having ion exchange groups converted from the precursor groups in the repeating units (A).

The ion exchange group is preferably a group (g1).

$$-(SO_2X(SO_2R^f)_a)^-M^+ \qquad (g1)$$

+

$M^+$is $H^+$

$R^f$ is a linear or branched perfluoroalkyl group which may have an etheric oxygen atom. The number of carbon atoms in the perfluoroalkyl group is preferably from 1 to 8, more preferably from 1 to 6. In a case where there are two or more $R^f$'$s_1$ the respective $R^f$'s may be the same groups or different groups.

X is an oxygen atom, a nitrogen atom or a carbon atom, provided that when X is an oxygen atom, a=0, when X is a nitrogen atom, a=1, and when X is a carbon atom, a=2.

The group (g1) may, for example, be a sulfonic acid group ($-SO_3^-M^+$ group), a sulfonimide group ($-SO_2N(SO_2R^f)^-M^+$ group) or a sulfonmethide group ($-SO_2C(SO_2R^f)_2)M^+$ group).

The repeating units (A') are units (u12) in view of a high effect of improving the electrode performance of the polymer. Units (u11) are easily prepared but not according to the invention.

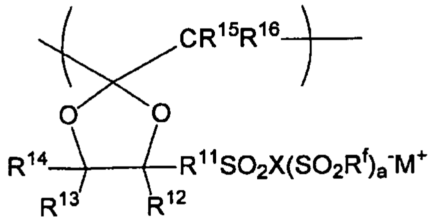

(u11)

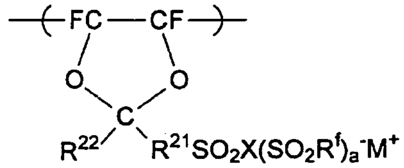

(u12)

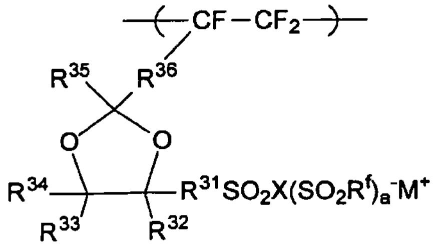

(u13)

$R^{11}$ to $R^{13}$, $R^{15}$ and $R^{16}$ are as defined for the compound (m11).

$R^{14}$ is a monovalent perflluoroorganic group which may have an etheric oxygen atom, a fluorine atom or a $-R^{11}(SO_2X(SO_2R^f)_a^-M^+$ group.

It is preferred that at least one of $R^{15}$ and $R^{16}$ is a fluorine atom, and it is more preferred that both of them are a fluorine atom, in view of high polymerizability.

$R^{21}$ and $R^{22}$ are as defined for the compound (m12).

$R^{31}$ to $R^{36}$ are as defined for the compound (m13).

The units (u11) are particularly preferably units (u11-1) in view of easiness of preparation of the monomer (a) constituting the repeating units (A).

The units (u12) may, for example, be units (u12-1) or units (u12-2).

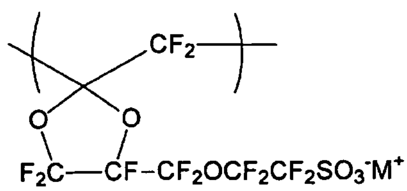

(u11-1)

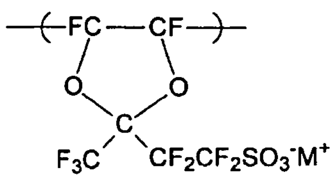

(u12-1)

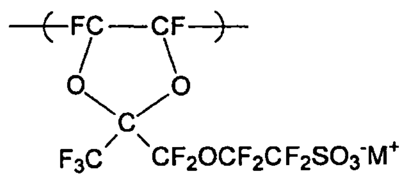

(u12-2)

Repeating units (B):

Repeating units (B) are repeating units based on the monomer (b), i.e. units (u2).

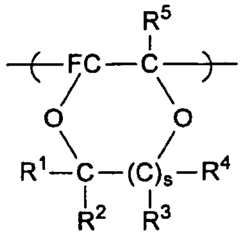

(u2)

$R^1$ to $R^5$ are as defined for the compound (m2).
$R^5$ is preferably a fluorine atom in view of high polymerizability.

The units (u2) are particularly preferably units (u2-1) in view of a high effect of improving the electrode performance of the polymer.

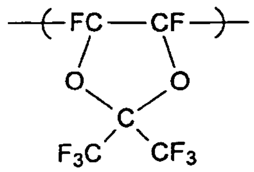

(u2-1)

Other repeating units (C):

Other repeating units (C) are repeating units based on the monomer (c).

Such other repeating units (C) are particularly preferably repeating units based on TFE with a view to decreasing the water content of the polymer (H). Ion exchange capacity:

The ion exchange capacity of the polymer (H) is preferably from 0.7 to 2.3 meq/g dry resin, more preferably from 1.1 to 2.0 meq/g dry resin. When the ion exchange capacity is at least 0.7 meq/g dry resin, the polymer (H) has high electrical conductivity and accordingly when it is used as an electrolyte material of a catalyst layer of a polymer electrolyte fuel cell, sufficient cell output will be obtained. When the ion exchange capacity is at most 2.3 meq/g dry resin, preparation of a polymer (F) having a high intrinsic viscosity will be easy, and further the increase in the water content of the polymer (H) can be suppressed.

In order that the polymer (H) may have an ion exchange capacity of at least 0.7 meq/g dry resin, the proportion of the monomer (a) when the polymer (F) is prepared is adjusted. Specifically, it is important to control the monomer composition at the time of the polymerization, and for that purpose, it is necessary to determine the charge composition considering the polymerizabilities of monomers. Further, when two or more types of monomers are reacted, it is possible to let the reaction proceed at a constant composition by successively or continuously adding a monomer having a higher reactivity.
Production of polymer (H):

The polymer (H) is produced by converting the precursor groups in the polymer (F) to ion exchange groups.

As a method of converting $-SO_2F$groups to sulfonic acid groups ($-SO_3^-H^+$ groups), the following method (i) may

be mentioned, and as a method of converting $-SO_2F$groups to sulfonimide groups ($-SO_2N(SO_2R^f)^-H^+$ groups), the following method (ii) may be mentioned.

(i) A method of hydrolyzing $-SO_2F$groups in the polymer (F) to a sulfonic acid salt and then converting the sulfonic acid salt to acid-form to obtain sulfonic acid groups.
(ii) A method of imidizing $-SO_2F$groups in the polymer (F) to salt-form sulfonimide groups, followed by conversion to acid-form to form acid-form sulfonimide groups.

Method (i):

The hydrolysis is carried out, for example, by contacting the polymer (F) with a basic compound in a solvent. The basic compound may, for example, be sodium hydroxide or potassium hydroxide. The solvent may, for example, be water or a mixed solvent of water with a polar solvent. The polar solvent may, for example, be an alcohol (such as methanol or ethanol) or dimethylsulfoxide.

The conversion to acid-form may be carried out, for example, by contacting the polymer having a sulfonic acid salt with an aqueous solution of hydrochloric acid, sulfuric acid or the like.
The hydrolysis and conversion to acid-form are carried out usually at a temperature of from 0 to 120°C.
Method (ii):

As the imidation, the following methods may, for example, be mentioned.

(ii-1) A method of reacting $-SO_2F$ groups with $R^fSO_2NHM$.
(ii-2) A method of reacting $-SO_2F$ groups with $R^fSO_2NH_2$ in the presence of an alkali metal hydroxide, an alkali metal carbonate, MF, ammonia or a primary to tertiary amine.
(ii-3) A method of reacting $-SO_2F$ groups with $R^fSO_2NMSi(CH_3)_3$.

Here, M is an alkali metal or a primary to quaternary ammonium.
The conversion to acid-form is carried out by treating the polymer having salt-form sulfonimide groups with an acid (such as sulfuric acid, nitric acid or hydrochloric acid).
Further, the polymer (H) wherein ion exchange groups are sulfonimide groups may also be produced by polymerizing a monomer (a') having a sulfonimide group converted from a $-SO_2F$ group in the monomer (a), and the monomer (b), and as the case requires, the monomer (c).
The monomer (a') may be produced by adding chlorine or bromine to the carbon-carbon double bond in the monomer (a), and converting a $-SO_2F$ group to a sulfonimide group by the method (ii), followed by a dechlorination or debromination reaction by means of metallic zinc.
The above-described electrolyte material of the present invention comprises a polymer (H) having ion exchange groups converted from precursor groups in a polymer (F) having specific repeating units (A) and specific repeating units (B), and accordingly a membrane/electrode assembly having a catalyst layer containing the electrolyte material can exhibit sufficient power generation characteristics (such as output voltage) under low or no humidity conditions, and under high humidity conditions. Particularly under severe conditions such as under high temperature and low or no humidity conditions (cell temperature: at least 90°C, humidity: at most 30%RH), high power generation characteristics (such as output voltage) can be exhibited.
Here, if the ion exchange capacity of the polymer (H) is increased to obtain higher performance under low or no humidity conditions, the water content (water absorptivity) of the polymer (H) will be drastically increased. Accordingly, the present inventors have conducted extensive studies and as a result, they have found that the increase in the water content of the polymer (H) can be suppressed by increasing the intrinsic viscosity of the polymer (F) in addition to increasing the ion exchange capacity of the polymer (H).
It has been known that with respect to a conventional crystalline polymer (e.g. a polymer having sulfonic acid groups converted from $-SO_2F$ groups in a polymer having repeating units based on the above compound (m3) and repeating units based on TFE), the mechanical strength is increased when the molecular weight (i.e. the intrinsic viscosity) is increased, however, the effect of suppressing the water content is small even when the intrinsic viscosity is increased. The phenomenon such that the increase in the water content can be suppressed when the intrinsic viscosity is increased, is remarkable particularly in an amorphous polymer such as the polymer (H) of the present invention.

<Liquid composition>

The liquid composition of the present invention is a composition comprising a dispersion medium and the

electrolyte material of the present invention dispersed in the dispersion medium.

The dispersion medium contains an organic solvent having a hydroxy group.

The organic solvent having a hydroxy group may, for example, be methanol, ethanol, 1-propanol, 2-propanol, 2,2,2-trifluoroethanol, 2,2,3,3,3-pentafluoro-1-propanol, 2,2,3,3,-tetrafluoro-1-propanol, 4,4,5,5,5-pentafluoro-1-pentanol, 1,1,1,3,3,3-hexafluoro-2-propanol, 3,3,3-trifluoro-1-propanol, 3,3,4,4,5,5,6,6,6-nonafluoro-1-hexanol, 3,3,4,4,5,5,6,6,7,7,8,8,8-tridecafluoro-1-octanol.

The organic solvents having a hydroxy group may be used alone or as a mixture of two or more of them.

The dispersion medium preferably contains water.

The proportion of water is preferably from 10 to 99 mass%, more preferably from 40 to 99 mass% in the dispersion medium (100 mass%). Dispersibility of the electrolyte material in the dispersion medium can be improved by increasing the proportion of water.

The proportion of the organic solvent having a hydroxy group is preferably from 1 to 90 mass%, more preferably from 1 to 60 mass% in the dispersion medium (100 mass%).

The proportion of the electrolyte material is preferably from 1 to 50 mass%, more preferably from 3 to 30 mass% in the liquid composition (100 mass%).

A method of preparing the liquid composition may be a method of applying shearing to the electrolyte material in the dispersion medium under atmospheric pressure or in a state where it is sealed in an autoclave or the like. The preparation temperature is preferably from 0 to 250°C, more preferably from 20 to 150°C. As the case requires, shearing such as ultrasonic waves may be applied.

The liquid composition of the present invention is suitably used for formation of a catalyst layer of a membrane/electrode assembly as described hereinafter.

<Membrane/electrode assembly>

Fig. 1 is a cross section illustrating one example of a membrane/electrode assembly (hereinafter referred to as a membrane/electrode assembly) for a polymer electrolyte fuel cell of the present invention. A membrane/electrode assembly 10 comprises an anode 13 having a catalyst layer 11 and a gas diffusion layer 12, a cathode 14 having a catalyst layer 11 and a gas diffusion layer 12, and a polymer electrolyte membrane 15 disposed between the anode 13 and the cathode 14 in a state where it is in contact with the catalyst layers 11.

(Catalyst layer)

The catalyst layer 11 is a layer containing a catalyst and a proton conductive polymer.

The catalyst may be a supported catalyst having platinum or a platinum alloy supported on a carbon carrier.

The carbon carrier may, for example, be a carbon black powder.

The proton conductive polymer may be the electrolyte material of the present invention or a known electrolyte material. The proton conductive polymer contained in the catalyst layer of at least one of the cathode and the anode is the electrolyte material of the present invention, and it is preferred that the proton conductive polymer contained in the catalyst layer of the cathode is the electrolyte material of the present invention.

The catalyst layer 11 may contain a water-repellent agent with a view to increasing the effect to suppress flooding. The water-repellent agent may, for example, be a tetrafluoroethylene/hexafluoropropylene copolymer, a tetrafluoroethylene/perfluoro(alkyl vinyl ether) copolymer or polytetrafluoroethylene. The water-repellent agent is preferably a fluoropolymer soluble in a solvent, from such a viewpoint that the water repellent treatment of the catalyst layer 11 is easy. The amount of the water-repellent agent is preferably from 0.01 to 30 mass% in the catalyst layer (100 mass%).

As a method of forming the catalyst layer 11, the following methods may be mentioned.

(i) A method of applying a fluid for forming a catalyst layer on the polymer electrolyte membrane 15, the gas diffusion layer 12 or a carbon layer 16, followed by drying.

(ii) A method of applying a fluid for forming a catalyst layer on a substrate film, followed by drying to form a catalyst layer 11, and transferring the catalyst layer 11 to the polymer electrolyte membrane 15.

The fluid for forming a catalyst layer is a fluid comprising the electrolyte material and the catalyst dispersed in a dispersion medium. The fluid for forming a catalyst layer may be prepared, for example, by mixing the liquid composition of the present invention with a dispersion of the catalyst.

(Gas diffusion layer)

The gas diffusion layer 12 has a function to uniformly diffuse a gas into the catalyst layer 11 and a function as

a current collector.

The gas diffusion layer 12 may, for example, be carbon paper, carbon cloth or carbon felt.

The gas diffusion layer 12 is preferably subjected to water repellent treatment e.g. by polytetrafluoroethylene.

(Carbon layer)

The membrane/electrode assembly 10 may have a carbon layer 16 between the catalyst layer 11 and the gas diffusion layer 12 as shown in Fig. 2. By disposing the carbon layer 16, the gas diffusion properties on the surface of the catalyst layer 11 will be improved, and the power generation performance of a polymer electrolyte fuel cell will be remarkably improved.

The carbon layer 16 is a layer containing carbon and a nonionic fluoropolymer.

The carbon is preferably carbon nanofibers having a fiber diameter of from 1 to 1,000 nm and a carbon length of at most 1,000 μm.

The nonionic fluoropolymer may, for example, be polytetrafluoroethylene.

(Polymer electrolyte membrane)

The polymer electrolyte membrane 15 is a membrane containing a proton conductive polymer.

The proton conductive polymer may be the electrolyte material of the present invention or a known electrolyte material. The known electrolyte material may, for example, be a polymer having sulfonic acid groups converted from $-SO_2F$ groups in a polymer having repeating units based on a compound (m3) and repeating units based on TFE; or a polymer having sulfonic acid groups converted from $-SO_2F$ groups in a polymer having repeating units based on a compound (m4) and repeating units based on TFE.

$$CF_2=CF(OCF_2CF_2)_mO_p(CF_2)_mSO_2F \qquad (m3)$$

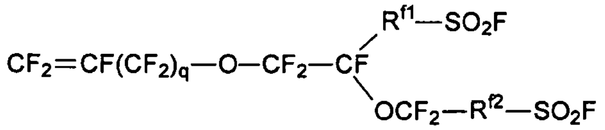

(m4)

Z is a fluorine atom or a trifluoromethyl group, m is an integer of from 0 to 3, p is 0 or 1, n is from 1 to 12, and m+p>0.

Each of $R^{11}$ and $R^{12}$ is a single bond or a $C_{1-6}$ linear perfluoroalkylene group (which may have an etheric oxygen atom), and q is 0 or 1.

The polymer electrolyte membrane 15 can be formed, for example, by a method (a casting method) wherein a liquid composition of the electrolyte material is applied on a substrate film or the catalyst layer 11, followed by drying.

The liquid composition is a dispersion having the electrolyte material dispersed in a dispersion medium containing an organic solvent having a hydroxy group and water.

In order to stabilize the polymer electrolyte membrane 15, it is preferred to carry out heat treatment. The temperature for the heat treatment is preferably from 130 to 200°C depending on the type of the electrolyte material. When the temperature for the heat treatment is at least 130°C, the electrolyte material will not excessively contain water. When the temperature for the heat treatment is at most 200°C, heat decomposition of ion exchange groups may be suppressed, and a decrease in the proton conductivity of the polymer electrolyte membrane 15 may be suppressed.

The polymer electrolyte membrane 15 may be treated with an aqueous hydrogen peroxide solution as the case requires.

The polymer electrolyte membrane 15 may be reinforced by a reinforcing material. The reinforcing material may, for example, be a porous body, fibers, woven fabric or nonwoven fabric. The material of the reinforcing material may, for example, be polytetrafluoroethylene, a tetrafluoroethylene/hexafluoropropylene copolymer, a tetrafluoroethylene/perfluoro(alkyl vinyl ether) copolymer, polyethylene, polypropylene or polyphenylene sulfide.

The polymer electrolyte membrane 15 may contain at least one type of atoms selected from the group consisting of cerium and manganese in order to further improve the durability. Cerium and manganese will decompose hydrogen peroxide which is a substance to cause deterioration of the polymer electrolyte membrane 15. Such cerium or manganese is preferably present in the form of ions in the polymer electrolyte membrane 15, and if it is present in the form of ions, it may be present in any state in the polymer electrolyte membrane 15.

The polymer electrolyte membrane 15 may contain silica or a hetero polyacid (such as zirconium phosphate, phosphorus molybdic acid or phosphorus tungstic acid) as a water retention agent to prevent drying. (Process for

producing membrane/electrode assembly)

The membrane/electrode assembly 10 is produced, for example, by the following method.

(i) A method of forming catalyst layers 11 on a polymer electrolyte membrane 15 to form a membrane/catalyst layer assembly, and sandwiching such a membrane/catalyst layer assembly between gas diffusion layers 12.
(ii) A method of forming a catalyst layer 11 on a gas diffusion layer 12 to form electrodes (anode 13 and cathode 14), and sandwiching a polymer electrolyte membrane 15 between such electrodes.

In a case where the membrane/electrode assembly 10 has a carbon layer 16, the membrane/electrode assembly 10 is produced, for example, by the following method.

(i) A method of applying a dispersion containing carbon and a nonionic fluoropolymer on a substrate film, followed by drying to form a carbon layer 16, forming a catalyst layer 11 on the carbon layer 16, bonding such catalyst layers 11 to a polymer electrolyte membrane 15, separating the substrate films to form a membrane/catalyst layer assembly having the carbon layers 16, and sandwiching such a membrane/catalyst layer assembly between gas diffusion layers 12.
(ii) A method of applying a dispersion containing carbon and a nonionic fluoropolymer on a gas diffusion layer 12, followed by drying to form a carbon layer 16, and sandwiching a membrane/catalyst layer assembly having catalyst layers 11 formed on a polymer electrolyte membrane 15 between the gas diffusion layers 12 each having the carbon layer 16.

The above-described membrane/electrode assembly 10 is excellent in the power generation characteristics under low or no humidity conditions and under high humidity conditions since the catalyst layer 11 contains the electrolyte material of the present invention. Particularly, it is excellent in the power generation characteristics under severe conditions such as under high temperature and low or no humidity conditions.

<Polymer electrolyte fuel cell>

The membrane/electrode assembly of the present invention is used for a polymer electrolyte fuel cell. A polymer electrolyte fuel cell is produced, for example, by sandwiching a membrane/electrode assembly between two separators to form a cell, and stacking a plurality of such cells.

As a separator, an electrically conductive carbon plate having grooves formed to constitute flow paths for a fuel gas or an oxidant gas containing oxygen (such as air or oxygen) may, for example, be mentioned.

As a type of the polymer electrolyte fuel cell, a hydrogen/oxygen type fuel cell or a direct methanol type fuel cell (DMFC) may, for example, be mentioned. Methanol or a methanol aqueous solution to be used as a fuel for DMFC may be a liquid feed or a gas feed.

EXAMPLES

Now, the present invention will be described in detail with reference to Examples. However, it should be understood that the present invention is by no means restricted to such specific Examples. Examples 1 to 9 and 15 to 23 are Examples of the present invention, and Examples 10 to 14 and 24 to 28 are Comparative Examples.

(Intrinsic viscosity)

The intrinsic viscosity of the polymer (F) was obtained by a method disclosed in "Shin Jikken Kagaku Kouza (New Experimental Chemistry) 19 Kobunshi Kagaku (Polymer Chemistry) II", Maruzen Company, Limited, p. 607 to 611.

The polymer (F) was dissolved in hexafluorobenzene as a solvent to obtain a solution. In a thermostatic chamber held at 30°C, using an Ubbelohde viscometer (manufactured by SHIBATA SCIENTIFIC TECHNOLOGY LTD.), the intrinsic viscosity was calculated from falling times of the solvent and the solution having the polymer dissolved, and the polymer concentration of the solution.

(Ion exchange capacity)

The ion exchange capacity of the polymer (H) was obtained by the following method.

The polymer (H) was put in a glove box and left to stand in an atmosphere into which dry nitrogen was made to flow for 24 hours or longer and dried. The dry mass of the polymer (H) was measured in the glove box.

The polymer (H) was immersed in a 2 mol/L sodium chloride aqueous solution and left to stand at 60°C for one

hour and then cooled to room temperature. The sodium chloride aqueous solution in which the polymer (H) had been immersed was titrated with a 0.5 mol/L sodium hydroxide aqueous solution to determine the ion exchange capacity of the polymer (H).

(Water content)

The water content of the polymer (H) was obtained by the following method.

The polymer (F) was heated to a temperature at which the polymer (F) flows, and then formed into a film having a thickness of from 100 to 200 μm by press molding. Then, the film was immersed in an aqueous solution containing 20 mass% of methanol and 15 mass% of potassium hydroxide for 40 hours to hydrolyze and convert $-SO_2F$ groups in the polymer (F) in the film to $-SO_3K$ groups. Then, the film was immersed in a 3 mol/L hydrochloric acid aqueous solution for 2 hours. The hydrochloric acid aqueous solution was changed, and the same treatment was further carried out four times to convert the $SO_3K$ groups in the polymer in the film to sulfonic acid groups. The film was sufficiently washed with ultrapure water to obtain a film of the polymer (H).

The film was immersed in warm water at 80°C for 16 hours, and the film together with warm water was cooled to room temperature. The film was taken out from water, water droplets attached to the surface were wiped off, and the mass of the film containing water was immediately measured. Then, the film was put in a glove box and left to stand in an atmosphere into which dry nitrogen was blown for 24 hours or longer to dry the film. Then, the dry mass of the film was measured in the glove box. The mass of water which the polymer (H) absorbs when it contains water was obtained from the difference between the mass of the film when it contained water and the dry mass. Further, the water content of the polymer (H) was obtained from the following formula and evaluated under the following standards.

Water content=(mass of water which the film absorbs when it contains water/dry mass of the film)×100

A: Water content less than 250%.
B: Water content at least 250% and less than 600%.
C: Water content at least 600%.

(Compound (m11)) (not according to the invention) Preparation of compound (m11-1):

Compound (m11-1) was prepared in accordance with the method disclosed in Examples at pages 37 to 42 of WO2003/037885.

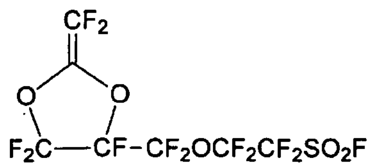

(m11-1)

Preparation of compound (m11-2):

Compound (m11-2) was prepared in accordance with the method disclosed in Example 4 of JP-A-2005-314388.

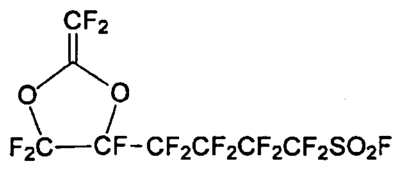

(m11-2)

Preparation of compound (m11-3):

Compound (m11-3) was prepared in accordance with the method disclosed in Example 5 of JP-A-2005-314388.

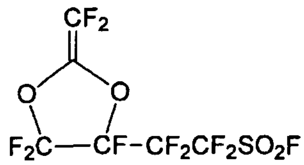

(m11-3)

(Compound (m12))

Preparation of compound (m12-1):

Compound (m12-1) was prepared in accordance with the method disclosed in Example 1 of JP-A-2006-152249.

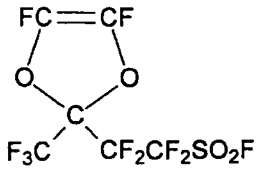

(m12-1)

Preparation of compound (m12-2):

Compound (m12-2) was prepared in accordance with the method disclosed in Example 2 of JP-A-2006-152249.

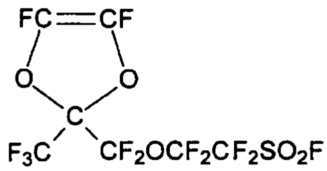

(m12-2)

(Compound (m2))

Compound (m2-1):

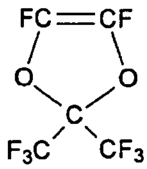

(m2-1)

(Compound (m51))

Compound (m51-1):

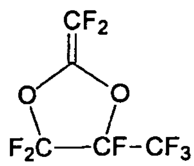

(m51-1)

(Compound (m3))

Compound (m3-1):

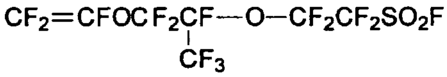

(m3-1)

(Compound (m4))

Preparation of compound (m4-1):

Compound (m4-1) was prepared in accordance with the method disclosed at page 24 of WO2007/013532.

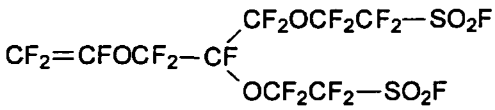

(m4-1)

(Radial initiator)

Compound (i-1):

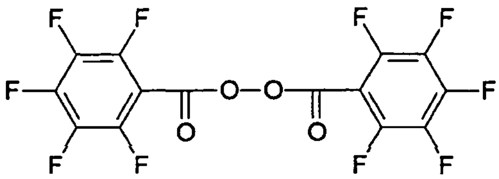

(i-1)

Compound (i-2):

$(C_3F_7COO)_2$ (i-2)

Compound (i-3):

$((CH_3)_2CHOCOO)_2$ (i-3)

(Solvent)

Compound (s-1):

$CClF_2CF_2CHClF$ (s-1)

Compound (s-2):

$CH_3CCl_2F$ (s-2)

[EXAMPLE 1]

(not according to the invention)

Into a stainless steel autoclave having an internal capacity of 125 mL, 5.97 g of compound (m11-1), 13.70 g of compound (m2-1), 13.75 g of compound (s-1) and 17.1 mg of compound (i-1) were charged, followed by sufficient deaeration under cooling with liquid nitrogen. Then, the temperature was raised to 65°C and held for 6 hours, and then the autoclave was cooled to terminate the reaction.

The formed product was diluted with compound (s-1), and n-hexane was added thereto to agglomerate a polymer, followed by filtration. Then, the polymer was stirred in compound (s-1), re-agglomerated with n-hexane and dried under reduced pressure overnight at 80°C to obtain polymer (F-1). The yield was 3.7 g. The intrinsic viscosity of the polymer (F-1) was measured. The results are shown in Table 1.

Polymer (F-1) was immersed in an aqueous solution containing 20 mass% of methanol and 15 mass% of potassium hydroxide at 50°C for 40 hours to hydrolyze and convert $-SO_2F$ groups in polymer (F-1) to $-SO_2K$ groups. Then, the polymer was immersed in a 3 mol/L hydrochloric acid aqueous solution at room temperature for 2 hours. The hydrochloric acid aqueous solution was changed, and the same treatment was further carried out four times to obtain polymer (H-1) having sulfonic acid groups converted from $-SO_3K$ groups in the polymer. Polymer (H-1) was sufficiently washed with ultrapure water. The ion exchange capacity and the water content of polymer (H-1) were measured. The results are shown in Table 1.

To polymer (H-1), a mixed solvent of ethanol and water (ethanol/water=60/40 mass ratio) was added to adjust the solid content concentration to 15 mass%, followed by stirring using an autoclave at 105°C for 8 hours to obtain liquid composition (D-1) having polymer (H-1) dispersed in a dispersion medium.

[EXAMPLE 2]

(not according to the invention)

Into a stainless steel autoclave having an internal capacity of 125 mL, 11.17 g of compound (m11-1), 23.26 g of compound (m2-1), 12.06 g of compound (s-1) and 22.3 mg of compound (i-1), were charged, followed by sufficient deaeration under cooling with liquid nitrogen. Then, the temperature was raised to 65°C, followed by stirring for 18 hours, and then the autoclave was cooled to terminate the reaction.

The formed product was diluted with compound (s-1), and n-hexane was added thereto to agglomerate a polymer, followed by filtration. Then, the polymer was stirred in compound (s-1), re-agglomerated with n-hexane and dried under reduced pressure overnight at 80°C to obtain polymer (F-2). The yield was 14.8 g. The intrinsic viscosity of polymer (F-2) was measured. The results are shown in Table 1.

Using polymer (F-2), polymer (H-2) and liquid composition (D-2) were obtained in the same manner as in Example 1. The ion exchange capacity and the water content of polymer (H-2) were measured. The results are shown in Table 1.

[EXAMPLE 3]

(not according to the invention)

Into a stainless steel autoclave having an internal capacity of 125 mL, 6.20 g of compound (m11-1), 18.0 g of compound (m2-1), 7.5 g of compound (s-1) and 15.5 mg of compound (i-1), are charged, followed by sufficient deaeration under cooling with liquid nitrogen. Then, the temperature is raised to 65°C, followed by stirring for 18 hours, and then the autoclave is cooled to terminate the reaction.

The formed product is diluted with compound (s-1), and n-hexane is added thereto to agglomerate a polymer, followed by filtration. Then, the polymer is stirred in compound (s-1), re-agglomerated with n-hexane and dried under reduced pressure overnight at 80°C to obtain polymer (F-3). The yield is 8.0 g. The intrinsic viscosity of polymer (F-3) is measured. The results are shown in Table 1.

Using polymer (F-3), polymer (H-3) and liquid composition (D-3) are obtained in the same manner as in Example 1. The ion exchange capacity and the water content of polymer (H-3) are measured. The results are shown in Table 1.

[EXAMPLE 4]

(not according to the invention)

Into a stainless steel autoclave having an internal capacity of 125 mL, 12.07 g of compound (m11-2), 23.26 g of compound (m2-1), 12.0 g of compound (s-1) and 22.0 mg of compound (i-1), are charged, followed by sufficient deaeration under cooling with liquid nitrogen. Then, the temperature is raised to 65°C, followed by stirring for 18 hours, and then the autoclave is cooled to terminate the reaction.

The formed product is diluted with compound (s-1), and n-hexane is added thereto to agglomerate a polymer, followed by filtration. Then, the polymer is stirred in compound (s-1), re-agglomerated with n-hexane and dried under reduced pressure overnight at 80°C to obtain polymer (F-4). The yield is 14.0 g. The intrinsic viscosity of polymer (F-4) is measured. The results are shown in Table 1.

Using polymer (F-4), polymer (H-4) and liquid composition (D-4) are obtained in the same manner as in Example 1. The ion exchange capacity and the water content of polymer (H-4) are measured. The results are shown in Table 1.

[EXAMPLE 5]

(not according to the invention)

Into a stainless steel autoclave having an internal capacity of 125 mL, 5.23 g of compound (m11-3), 18.0 g of compound (m2-1), 7.5 g of compound (s-1) and 14.5 mg of compound (i-1), are charged, followed by sufficient deaeration under cooling with liquid nitrogen. Then, the temperature is raised to 65°C, followed by stirring for 18 hours, and then the autoclave is cooled to terminate the reaction.

The formed product is diluted with compound (s-1), and n-hexane is added thereto to agglomerate a polymer, followed by filtration. Then, the polymer is stirred in compound (s-1), re-agglomerated with n-hexane and dried under reduced pressure overnight at 80°C to obtain polymer (F-5). The yield is 9.2 g. The intrinsic viscosity of polymer (F-5) is measured. The results are shown in Table 1.

Using polymer (F-5), polymer (H-5) and liquid composition (D-5) are obtained in the same manner as in Example 1. The ion exchange capacity and the water content of polymer (H-5) are measured. The results are shown in Table 1.

[EXAMPLE 6]

Into a stainless steel autoclave having an internal capacity of 125 mL, 15.29 g of compound (m12-1), 15.0 g of compound (m2-1), 10.0 g of compound (s-1) and 23 mg of compound (i-1), are charged, followed by sufficient deaeration under cooling with liquid nitrogen. Then, the temperature is raised to 65°C, followed by stirring for 18 hours, and then the autoclave is cooled to terminate the reaction.

The formed product is diluted with compound (s-1), and n-hexane is added thereto to agglomerate a polymer, followed by filtration. Then, the polymer is stirred in compound (s-1), re-agglomerated with n-hexane and dried under reduced pressure overnight at 80°C to obtain polymer (F-6). The yield is 12.0 g. The intrinsic viscosity of polymer (F-6) is measured. The results are shown in Table 1.

Using polymer (F-6), polymer (H-6) and liquid composition (D-6) are obtained in the same manner as in Example 1. The ion exchange capacity and the water content of polymer (H-6) are measured. The results are shown in Table 1.

[EXAMPLE 7]

Into a stainless steel autoclave having an internal capacity of 125 mL, 20.07 g of compound (m12-2), 15.0 g of compound (m2-1), 12.0 g of compound (s-1) and 23 mg of compound (i-1), are charged, followed by sufficient deaeration under cooling with liquid nitrogen. Then, the temperature is raised to 65°C, followed by stirring for 18 hours, and then the autoclave is cooled to terminate the reaction.

The formed product is diluted with compound (s-1), and n-hexane is added thereto to agglomerate a polymer, followed by filtration. Then, the polymer is stirred in compound (s-1), re-agglomerated with n-hexane and dried under reduced pressure overnight at 80°C to obtain polymer (F-7). The yield is 14.0 g. The intrinsic viscosity of polymer (F-7) is measured. The results are shown in Table 1.

Using polymer (F-7), polymer (H-7) and liquid composition (D-7) are obtained in the same manner as in Example 1. The ion exchange capacity and the water content of polymer (H-7) are measured. The results are shown in Table 1.

[EXAMPLE 8]

(not according to the invention)

Into a stainless steel autoclave having an internal capacity of 125 mL, 22.26 g of compound (m11-1), 15.25 g of compound (m2-1), 11.0 g of compound (s-1) and 24 mg of compound (i-1), are charged, followed by sufficient deaeration under cooling with liquid nitrogen. Then, 3.0 g of TFE is charged, and the temperature is raised to 65°C, followed by stirring for 18 hours, and then the autoclave is cooled to terminate the reaction.
The formed product is diluted with compound (s-1), and n-hexane is added thereto to agglomerate a polymer, followed by filtration. Then, the polymer is stirred in compound (s-1), re-agglomerated with n-hexane and dried under reduced pressure overnight at 80°C to obtain polymer (F-8). The yield is 15.0 g. The composition of repeating units constituting the copolymer is analyzed by $^{19}$F-NMR, whereupon the proportion of repeating units based on TFE was 14 mol%. The intrinsic viscosity of polymer (F-8) is measured. The results are shown in Table 1.
Using polymer (F-8), polymer (H-8) and liquid composition (D-8) are obtained in the same manner as in Example 1. The ion exchange capacity and the water content of polymer (H-8) are measured. The results are shown in Table 1.

[EXAMPLE 9]

(not according to the invention)

Into a stainless steel autoclave having an internal capacity of 125 mL, 21.2 g of compound (m11-1), 21.96 g of compound (m2-1), 13.0 g of compound (s-1) and 25 mg of compound (i-1), are charged, followed by sufficient deaeration under cooling with liquid nitrogen. Then, 4.25 g of TFE is charged, and the temperature is raised to 65°C, followed by stirring for 18 hours, and then the autoclave is cooled to terminate the reaction.
The formed product is diluted with compound (s-1), and n-hexane is added thereto to agglomerate a polymer, followed by filtration. Then, the polymer is stirred in compound (s-1), re-agglomerated with n-hexane and dried under reduced pressure overnight at 80°C to obtain polymer (F-9). The yield is 17.0 g. The composition of repeating units constituting the copolymer is analyzed by $^{19}$F-NMR, whereupon the proportion of repeating units based on TFE was 16 mol%. The intrinsic viscosity of polymer (F-9) is measured. The results are shown in Table 1.
Using polymer (F-9), polymer (H-9) and liquid composition (D-9) are obtained in the same manner as in Example 1. The ion exchange capacity and the water content of polymer (H-9) are measured. The results are shown in Table 1.

[EXAMPLE 10]

(not according to the invention)

Into a stainless steel autoclave having an internal capacity of 125 mL, 49.64 g of compound (m3-1), 28.22 g of compound (s-1) and 38.9 mg of compound (i-2) dissolved in compound (s-1) at a concentration of 3.2 mass%, were charged, followed by sufficient deaeration under cooling with liquid nitrogen. Then, the temperature was raised to 30°C, TFE was introduced to the system to maintain the pressure under 0.37 MPaG. After stirring for 4.8 hours, the autoclave was cooled to terminate the reaction.
The formed product was diluted with compound (s-1), compound (s-2) was added thereto to agglomerate a polymer, followed by filtration. Then, the polymer was stirred in compound (s-1), re-agglomerated with compound (s-2) and dried under reduced pressure overnight at 80°C to obtain polymer (F-10). The yield was 15.0 g. The intrinsic viscosity of polymer (F-10) was measured. The results are shown in Table 1.
Using polymer (F-10), polymer (H-10) was obtained in the same manner as in Example 1. The ion exchange capacity and the water content of polymer (H-10) were measured. The results are shown in Table 1.
To polymer (H-10), a mixed solvent of ethanol and water (ethanol/water=70/30 mass ratio) was added to adjust the solid content concentration to 15 mass%, followed by stirring using an autoclave at 125°C for 8 hours. Water was further added to adjust the solid content concentration to 7.0 mass% to obtain liquid composition (D-10) having polymer (H-10) dispersed in a dispersion medium. The composition of the dispersion medium was ethanol/water=35/65 (mass ratio).

[EXAMPLE 11]

(not according to the invention)

Into a stainless steel autoclave having an internal capacity of 125 mL, 45.9 g of compound (m4-1), 16.5 g of

compound (s-1) and 12.65 mg of compound (i-3), were charged, followed by sufficient deaeration under cooling with liquid nitrogen. Then, the temperature was raised to 40°C, TFE was introduced to the system to maintain the pressure under 0.55 MPaG. After stirring at 40°C for 4.3 hours, the gas in the system was purged, and the autoclave was cooled to terminate the reaction.

The formed product was diluted with compound (s-1), compound (s-2) was added thereto to agglomerate a polymer, followed by filtration. Then, the polymer was stirred in compound (s-1), re-agglomerated with compound (s-2) and dried under reduced pressure overnight at 80°C to obtain polymer (F-11). The yield was 6.5 g. The intrinsic viscosity of polymer (F-11) was measured. The results are shown in Table 1.

Using polymer (F-11), polymer (H-11) was obtained in the same manner as in Example 1.

The ion exchange capacity and the water content of polymer (H-11) were measured. The results are shown in Table 1.

To polymer (H-11), a mixed solvent of ethanol, water and 1-butanol (ethanol/water/1-butanol=35/50/15 mass ratio) was added to adjust the solid content concentration to 15 mass%, followed by stirring using an autoclave at 125°C for 8 hours. Water was further added to adjust the solid content concentration to 9 mass% to obtain liquid composition (D-11) having polymer (H-11) dispersed in a dispersion medium. The composition of the dispersion medium was ethanol/water/1-butanol=20/70/10 (mass ratio).

[EXAMPLE 12]

(not according to the invention)

Into a stainless steel autoclave having an internal capacity of 125 mL, 9.38 g of compound (m11-1), 11.36 g of compound (m51-1), 28.59 g of compound (s-1) and 80.2 mg of compound (i-1), were charged, followed by sufficient deaeration under cooling with liquid nitrogen. Then, the temperature was raised to 65°C, followed by stirring for 5.6 hours, and then the autoclave was cooled to terminate the reaction.

The formed product was diluted with compound (s-1), and n-hexane was added thereto to agglomerate a polymer, followed by filtration. Then, the polymer was stirred in compound (s-1), re-agglomerated with n-hexane and dried under reduced pressure overnight at 80°C to obtain polymer (F-12). The yield was 14.0 g. The intrinsic viscosity of polymer (F-12) was measured. The results are shown in Table 1.

Using polymer (F-12), polymer (H-12) and liquid composition (D-12) were obtained in the same manner as in Example 10. The ion exchange capacity and the water content of polymer (H-12) were measured. The results are shown in Table 1.

[EXAMPLE 13]

(not according to the invention)

Into a stainless steel autoclave having an internal capacity of 125 mL, 66.9 g of compound (m3-1), 11.47 g of compound (m2-1) and 23 mg of compound (i-1), are charged, followed by sufficient deaeration under cooling with liquid nitrogen. Then, the temperature is raised to 40°C, followed by stirring for 24 hours, and then the autoclave is cooled to terminate the reaction.

The formed product is diluted with compound (s-1), and n-hexane is added thereto to agglomerate a polymer, followed by filtration. Then, the polymer is stirred in compound (s-1), re-agglomerated with n-hexane and dried under reduced pressure overnight at 80°C to obtain polymer (F-13). The yield is 19.5 g. The intrinsic viscosity of polymer (F-13) is measured. The results are shown in Table 1.

Using polymer (F-13), polymer (H-13) and liquid composition (D-13) are obtained in the same manner as in Example 10. The ion exchange capacity and the water content of polymer (H-13) are measured. The results are shown in Table 1.

[EXAMPLE 14]

(not according to the invention)

Into a stainless steel autoclave having an internal capacity of 125 mL, 6.18 g of compound (m11-1), 14.23 g of compound (m2-1), 29.61 g of compound (s-1) and 100 mg of compound (i-1), were charged, followed by sufficient deaeration under cooling with liquid nitrogen. Then, the temperature was raised to 65°C, followed by stirring for 5 hours, and then the autoclave was cooled to terminate the reaction.

The formed product was diluted with compound (s-1), and n-hexane was added thereto to agglomerate a

polymer, followed by filtration. Then, the polymer was stirred in compound (s-1), re-agglomerated with n-hexane and dried under reduced pressure overnight at 80°C to obtain polymer (F-14). The yield was 7.5 g. The intrinsic viscosity of polymer (F-14) was measured. The results are shown in Table 1.

Using polymer (F-14), polymer (H-14) and liquid composition (D-14) were obtained in the same manner as in Example 10. The ion exchange capacity and the water content of polymer (H-14) are measured. The results are shown in Table 1.

Only examples 6 and 7 are according to the invention.

TABLE 1

| Ex. | Intrinsic viscosity (dL/g) | Ion exchange capacity (meq/g dry resin) | Water content |
|---|---|---|---|
| 1 | 0.35 | 1.68 | B |
| 2 | 0.51 | 1.34 | A |
| 3 | 0.53 | 1.10 | A |
| 4 | 0.50 | 1.31 | A |
| 5 | 0.59 | 1.20 | A |
| 6 | 0.49 | 1.41 | B |
| 7 | 0.50 | 1.35 | B |
| 8 | 0.51 | 1.81 | B |
| 9 | 0.55 | 1.62 | A |
| 10 | 0.32 | 1.10 | A |
| 11 | 0.34 | 1.51 | A |
| 12 | 0.52 | 1.13 | A |
| 13 | 0.30 | 1.10 | A |
| 14 | 0.23 | 1.48 | C |

[EXAMPLE 15] (not according to the invention)

39 g of water was added to 10 g of a supported catalyst having 50 mass% of platinum supported on a carbon powder, followed by irradiation with ultrasonic waves for 10 minutes to obtain a dispersion of the catalyst. To the dispersion of the catalyst, 60 g of liquid composition (D-1) was added, and 64 g of ethanol was further added to adjust the solid content concentration to 8 mass% to obtain a fluid for forming a catalyst layer. The fluid was applied on a separately prepared sheet comprising a copolymer of ethylene and TFE (tradename: Aflex 100N, manufactured by Asahi Glass Company, Limited, thickness: 100 μm) (hereinafter referred to as an ETFE sheet) and dried at 80°C for 30 minutes and further subjected to heat treatment at 165°C for 30 minutes to form a catalyst layer having an amount of platinum of 0.35 mg/cm$^2$.

Liquid composition (D-11) was applied on an ETFE sheet by means of a die coater, dried at 80°C for 30 minutes and further subjected to heat treatment at 190°C for 30 minutes to form a polymer electrolyte membrane having a thickness of 20 μm.

The ETFE sheet was separated from the polymer electrolyte membrane, the polymer electrolyte membrane was sandwiched between two catalyst layers provided with the ETFE sheet and heat pressed at a pressing temperature of 160°C for a pressing time of 5 minutes under a pressure of 3 MPa to bond the catalyst layers on both sides of the polymer electrolyte membrane, and the ETFE sheets were separated from the catalyst layers to obtain a membrane/catalyst layer assembly having an electrode area of 25 cm$^2$.

On a gas diffusion layer comprising carbon paper, a carbon layer comprising carbon and polytetrafluoroethylene was formed.

The membrane/catalyst layer assembly was sandwiched between the gas diffusion layers so that the carbon layer and the catalyst layer were in contact with each other, to obtain a membrane/electrode assembly.

The membrane/electrode assembly was assembled into a cell for power generation, and the power generation characteristics were evaluated under the following two conditions.

(Evaluation conditions 1)

While the temperature of the membrane/electrode assembly was maintained at 100°C, hydrogen (utilization ratio: 50%) was supplied to the anode and air (utilization ratio: 50%) was supplied to the cathode, under a pressure of 175 kPa (absolute pressure). Both hydrogen and air were supplied without being humidified, and the cell voltage when the current density was 1.0 A/$cm^2$ was recorded and evaluated under the following standards. The results are shown in Table 2.

◎: Cell voltage being 0.6 V or higher.
○: Cell voltage being 0.55 V or higher and less than 0.6 V.
Δ : Cell voltage being 0.5 V or higher and less than 0.55 V.
× : Cell voltage being 0.4 V or higher and less than 0.5 V
× × : Cell voltage being less than 0.4 V.

(Evaluation conditions 2)

While the temperature of the membrane/electrode assembly was maintained at 80°C, hydrogen (utilization ratio: 50%) was supplied to the anode and air (utilization ratio: 50%) was supplied to the cathode, under a pressure of 175 kPa (absolute pressure). Both hydrogen and air were supplied under a relative humidity of 100%RH, and the cell voltage when the current density was 1.5 A/$cm^2$ was recorded and evaluated under the following standards. The results are shown in Table 2.

○: Cell voltage being 0. 5 V or higher.
Δ : Cell voltage being less than 0.5 V.
x: No power generation conducted.

[EXAMPLES 16 to 28] (only dispersion 6 and 7 are according to the invention)

A membrane/electrode assembly was prepared and the power generation characteristics were evaluated in the same manner as in Example 15 except that liquid composition (D-1) used for formation of the catalyst layers was changed to each of liquid compositions (D-2) to (D-4). The evaluation results are shown in Table 2.

TABLE 2 (only dispersion 6 and 7 are according to the invention)

| Ex. | Dispersion | Evaluation conditions 1 | Evaluation conditions 2 |
|---|---|---|---|
| 15 | D-1 | ◎ | Δ |
| 16 | D-2 | ○ | ○ |
| 17 | D-3 | Δ | ○ |
| 18 | D-4 | ○ | ○ |
| 19 | D-5 | Δ | ○ |
| 20 | D-6 | ◎ | Δ |
| 21 | D-7 | ◎ | Δ |
| 22 | D-8 | ◎ | Δ |
| 23 | D-9 | ○ | ○ |
| 24 | D-10 | × × | ○ |
| 25 | D-11 | × | ○ |
| 26 | D-12 | × | ○ |
| 27 | D-13 | × | ○ |
| 28 | D-14 | ◎ | × |

INDUSTRIAL APPLICABILITY

The electrolyte material of the present invention is useful as an electrolyte material for a polymer electrolyte fuel cell. Further, it is also useful for other applications (such as a proton permselective membrane to be used for water electrolysis, hydrogen peroxide production, ozone production or waste acid recovery; a diaphragm for electrolysis of sodium chloride or a redox flow cell, or a cation exchange membrane for electrodialysis to be used for desalination or salt production).

REFERENCE SYMBOLS

10 Membrane/electrode assembly
11 Catalyst layer
12 Gas diffusion layer
13 Anode
14 Cathode
15 Polymer electrolyte membrane
16 Carbon layer

**Claims**

1. An electrolyte material, which comprises a polymer (H) having ion exchange groups converted from precursor groups in the following polymer (F):

polymer (F): a polymer which has repeating units (A) based on a perfluoromonomer having a precursor group of an ion exchange group and a 5-membered ring to which the precursor group is bonded and repeating units (B) represented by the following formula (u2), and which has an intrinsic viscosity of at least 0.3 dL/g:

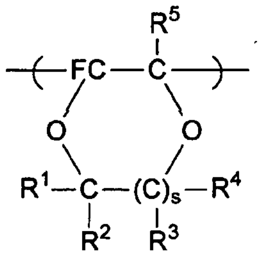

(u2)

wherein s is 0 or 1, each of $R^1$ and $R^2$ which are independent of each other, is a fluorine atom or a $C_{1-5}$ perfluoroalkyl group or they are bonded to form a spiro ring (provided that when s is 0), each of $R^3$ and $R^4$ which are independent of each other, is a fluorine atom or a $C_{1-5}$ perfluoroalkyl group, and $R^5$ is a fluorine atom, a $C_{1-5}$ perfluoroalkyl group or a $C_{1-5}$ perfluoroalkoxy group,
wherein at least one type of repeating units having ion exchange groups converted from the precursor groups in the repeating units (A) are repeating units represented by the following formula (u12):

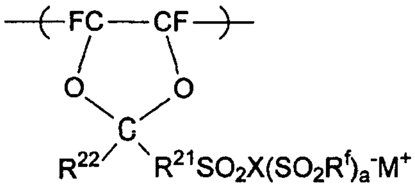

(u12)

wherein $R^f$ is a linear or branched perfluoroalkyl group which may have an etheric oxygen atom, and X is an oxygen atom, a nitrogen atom or a carbon atom, provided that when X is an oxygen atom, a=0, when X is a nitrogen atom, a=1, and when X is a carbon atom, a=2, $R^{21}$ is a $C_{1-6}$ perfluoroalkylene group or a $C_{2-6}$ perfluoroalkylene group having an etheric oxygen atom between the carbon-carbon bond, $R^{22}$ is a fluorine atom, a $C_{1-6}$

perfluoroalkyl group, a $C_{2-6}$ perfluoroalkyl group having an etheric oxygen atom between the carbon-carbon bond or a $-R^{21}(SO_2X(SO_2R^f)_a M^+$ group, wherein $M^+$ in (u12) is $H^+$, and
wherein at least one type of the repeating units represented by the formula (u12) are repeating units represented by the following formula (u12-1):

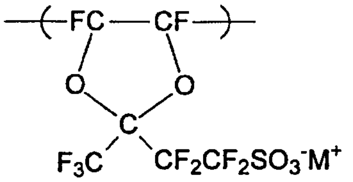

(u12-1)

or wherein at least one type of the repeating units represented by the formula (u12) are repeating units represented by the following formula (u12-2):

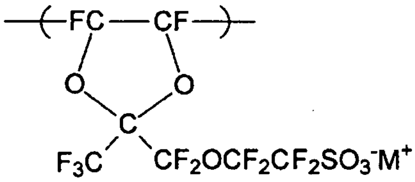

(u12-2)

2. The electrolyte material according to Claim 1, wherein $R^5$ is a fluorine atom.

3. The electrolyte material according to Claim 1 or 2, wherein at least one type of the repeating units represented by the formula (u2) are repeating units represented by the following formula (u2-1):

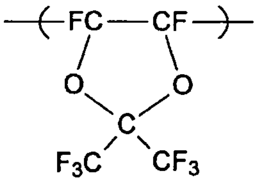

(u2-1)

4. The electrolyte material according to any one of Claims 1 to 3, wherein the polymer (F) further has repeating units based on tetrafluoroethylene.

5. A liquid composition comprising a dispersion medium and the electrolyte material as defined in any one of Claims 1 to 4 dispersed in the dispersion medium, wherein the dispersion medium contains an organic solvent having a hydroxy group.

6. A membrane/electrode assembly for a polymer electrolyte fuel cell, which comprises an anode having a catalyst layer containing a proton conductive polymer, a cathode having a catalyst layer containing a proton conductive polymer, and a polymer electrolyte membrane disposed between the anode and the cathode, wherein the proton conductive polymer contained in the catalyst layer of at least one of the cathode and the anode is the electrolyte material as defined in any one of Claims 1 to 4.

**Patentansprüche**

1. Elektrolytmaterial, das ein Polymer (H) mit Ionenaustauschgruppen, umgewandelt von Vorläufergruppen in dem folgenden Polymer (F), umfasst:

Polymer (F): ein Polymer, das Wiederholungseinheiten (A), basierend auf einem Perfluormonomer mit einer Vorläufergruppe einer Ionenaustauschgruppe und einem 5-gliedrigen Ring, an den die Vorläufergruppe gebunden ist, und Wiederholungseinheiten (B), dargestellt durch die folgende Formel (u2), aufweist und das eine intrinsische Viskosität von mindestens 0,3 dL/g aufweist:

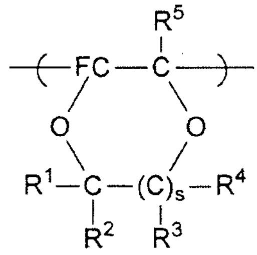

(u2)

wobei s 0 oder 1 ist, jedes von $R^1$ und $R^2$, die unabhängig voneinander sind, ein Fluoratom oder eine $C_{1-5}$-Perfluoralkylgruppe darstellt oder sie gebunden sind, um einen Spiroring zu bilden (vorausgesetzt, dass s 0 ist), jedes von $R^3$ und $R^4$, die unabhängig voneinander sind, ein Fluoratom oder eine $C_{1-5}$-Perfluoralkylgruppe darstellt und $R^5$ ein Fluoratom, eine $C_{1-5}$-Perfluoralkylgruppe oder eine $C_{1-5}$-Perfluoralkoxygruppe darstellt, wobei mindestens eine Art der Wiederholungseinheiten mit Ionenaustauschgruppen, umgewandelt von den Vorläufergruppen in den Wiederholungseinheiten (A), Wiederholungseinheiten, dargestellt durch die folgende Formel (u12), sind:

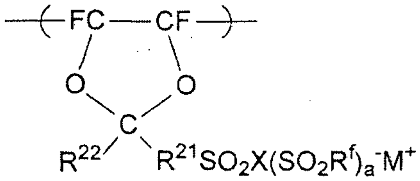

(u12)

wobei $R^f$ eine lineare oder verzweigte Perfluoralkylgruppe darstellt, die ein etherisches Sauerstoffatom aufweisen kann, und X ein Sauerstoffatom, ein Stickstoffatom oder ein Kohlenstoffatom darstellt, vorausgesetzt, dass, wenn X ein Sauerstoffatom darstellt, a = 0 ist, wenn X ein Stickstoffatom darstellt, a = 1 ist, und wenn X ein Kohlenstoffatom darstellt, a = 2 ist,
$R^{21}$ eine $C_{1-6}$-Perfluoralkylengruppe oder eine $C_{2-6}$-Perfluoralkylengruppe mit einem etherischen Sauerstoffatom zwischen der Kohlenstoff-Kohlenstoff-Bindung darstellt, $R^{22}$ ein Fluoratom, eine $C_{1-6}$-Perfluoralkylgruppe, eine $C_{2-6}$-Perfluoralkylgruppe mit einem etherischen Sauerstoffatom zwischen der Kohlenstoff-Kohlenstoff-Bindung oder eine $-R^{21}(SO_2X(SO_2R^f)_a^-M^+$-Gruppe darstellt, wobei $M^+$ in (u12) $H^+$darstellt, und
wobei mindestens eine Art der Wiederholungseinheiten, dargestellt durch die Formel (u12), Wiederholungseinheiten, dargestellt durch die folgende Formel (u12-1), sind:

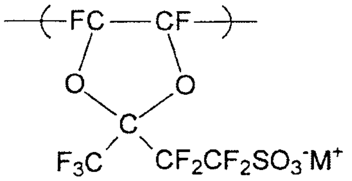

(u12-1)

oder wobei mindestens eine Art der Wiederholungseinheiten, dargestellt durch die Formel (u12), Wiederholungseinheiten, dargestellt durch die folgende Formel (u12-2), sind:

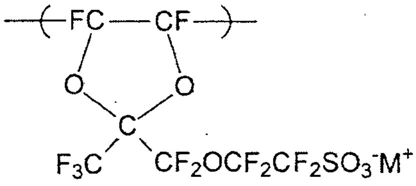

(u12-2)

2. Elektrolytmaterial nach Anspruch 1, wobei $R^5$ ein Fluoratom ist.

3. Elektrolytmaterial nach Anspruch 1 oder 2, wobei mindestens eine Art der Wiederholungseinheiten, dargestellt durch die Formel (u2), Wiederholungseinheiten, dargestellt durch die folgende Formel (u2-1), sind:

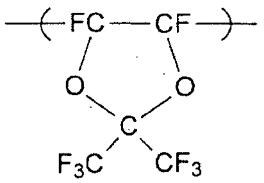

(u2-1)

4. Elektrolytmaterial nach einem der Ansprüche 1 bis 3, wobei das Polymer (F) weiter Wiederholungseinheiten, basierend auf Tetrafluorethylen, aufweist.

5. Flüssigzusammensetzung, umfassend ein Dispersionsmedium und das Elektrolytmaterial nach einem der Ansprüche 1 bis 4, dispergiert in dem Dispersionsmedium, wobei das Dispersionsmedium ein organisches Lösemittel mit einer Hydroxygruppe enthält.

6. Membran/Elektroden-Anordnung für eine Polymerelektrolytbrennstoffzelle, die eine Anode mit einer Katalysatorschicht, enthaltend ein protonenleitendes Polymer, eine Kathode mit einer Katalysatorschicht, enthaltend ein protonenleitendes Polymer, und eine Polymerelektrolytmembran, angeordnet zwischen der Anode und der Kathode, umfasst, wobei das protonenleitende Polymer, enthalten in der Katalysatorschicht von mindestens einem von der Kathode und der Anode, das Elektrolytmaterial nach einem der Ansprüche 1 bis 4 ist.

## Revendications

1. Matériau d'électrolyte qui comprend un polymère (H) présentant des groupes échangeurs d'ions convertis à partir de groupes précurseurs dans le polymère (F) suivant :

polymère (F) : un polymère qui présente des motifs répétitifs (A) à base d'un monomère perfluoré présentant un groupe précurseur d'un groupe échangeur d'ions et un cycle à 5 chaînons auquel est lié le groupe précurseur et des motifs répétitifs (B) représentés par la formule (U2) suivante, / et qui présente une viscosité intrinsèque d'au moins 0,3 dl/g :

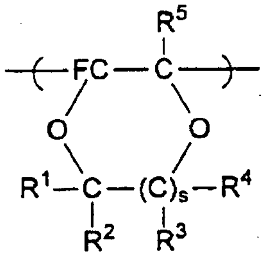

(u2)

dans laquelle s vaut 0 ou 1, chacun de $R^1$ et $R^2$, qui sont indépendants l'un de l'autre, est un atome de fluor ou un groupe perfluoroalkyle en $C_1$ à $C_5$, ou bien ils sont liés pour former un cycle spiro (sous réserve que s vaille 0), chacun de $R^3$ et $R^4$, qui sont indépendants l'un de l'autre, est un atome de fluor ou un groupe perfluoroalkyle en $C_1$ à $C_5$, et $R^5$ est un atome de fluor, un groupe perfluoroalkyle en $C_1$ à $C_5$ ou un groupe perfluoroalcoxy en $C_1$ à $C_5$,

dans lequel au moins un type de motifs répétitifs présentant des groupes échangeurs d'ions convertis à partir des groupes précurseurs dans les motifs répétitifs (A) est constitué de motifs répétitifs représentés par la formule (u12) suivante :

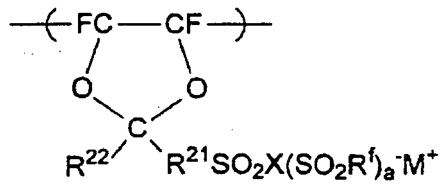

(u12)

dans laquelle $R^f$ est un groupe perfluoroalkyle linéaire ou ramifié pouvant porter un atome d'oxygène d'éther, et X est un atome d'oxygène, un atome d'azote ou un atome de carbone, sous réserve que, quand X est un atome d'oxygène, a = 0, quand X est un atome d'azote, a = 1, et quand X est un atome de carbone, a = 2, $R^{21}$ est un groupe perfluoroalkylène en $C_1$ à $C_6$ ou un groupe perfluoroalkylène en $C_1$ à $C_6$ portant un atome d'oxygène d'éther entre la liaison carbone-carbone, $R^{22}$ est un atome de fluor, un groupe perfluoroalkyle en $C_1$ à $C_6$, un groupe perfluoroalkyle en $C_1$ à $C_6$ portant un atome d'oxygène d'éther entre la liaison carbone-carbone ou un groupe $-R^{21}(SO_2X(SO_2R^f)_a{}^-M^+$ où $M^+$ dans (u12) est $H^+$, et
dans lequel au moins un type des motifs répétitifs représentés par la formule (u12) est constitué de motifs répétitifs représentés par la formule (u12-1) suivante :

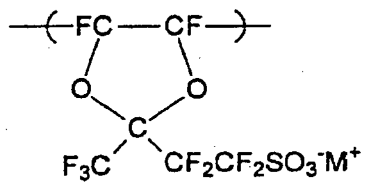

(u12-1)

dans lequel au moins un type des motifs répétitifs représentés par la formule (u12) est constitué de motifs répétitifs représentés par la formule (u12-2) suivante :

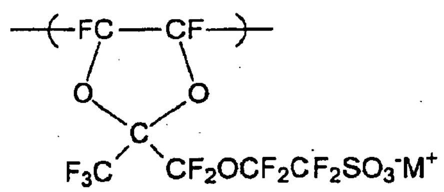

(u12-2)

2. Matériau d'électrolyte selon la revendication 1, dans lequel $R^5$ est un atome de fluor.

3. Matériau d'électrolyte selon la revendication 1 ou 2, dans lequel au moins un type des motifs répétitifs représentés par la formule (u2) est constitué de motifs répétitifs représentés par la formule (u2-1) suivante :

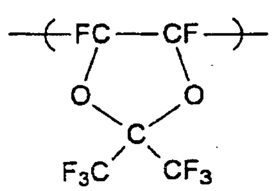

(u2-1)

4. Matériau d'électrolyte selon l'une quelconque des revendications 1 à 3, dans lequel le polymère (F) présente en outre des motifs répétitifs à base de tétrafluoroéthylène.

5. Composition liquide comprenant un milieu de dispersion et le matériau d'électrolyte tel que défini dans l'une quelconque des revendications 1 à 4 dispersé dans le milieu de dispersion, dans laquelle le milieu de dispersion contient un solvant organique présentant un groupe hydroxy.

**6.** Assemblage de membrane/électrodes pour une pile à combustible à électrolyte polymère, qui comprend une anode présentant une couche de catalyseur contenant un polymère conducteur de protons, une cathode présentant une couche de catalyseur contenant un polymère conducteur de protons, et une membrane d'électrolyte polymère disposée entre l'anode et la cathode, dans lequel le polymère conducteur de protons contenu dans la couche de catalyseur d'au moins l'une parmi la cathode et l'anode est le matériau d'électrolyte tel que défini dans l'une quelconque des revendications 1 à 4.

Fig. 1

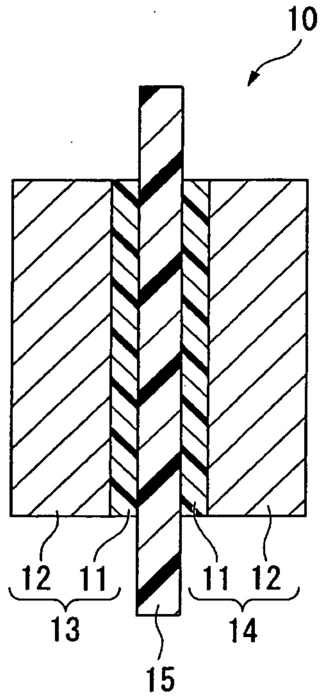


Fig. 2

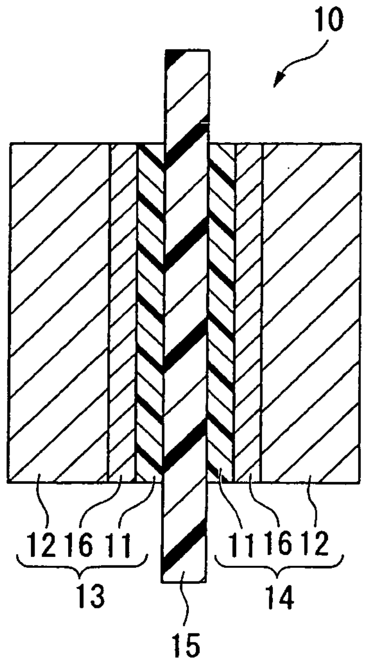

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2004097851 A
- WO 2003037885 A
- JP 2005314388 A
- JP 2009040909 A
- JP 2006152249 A
- JP 2006241302 A
- JP 6092957 A
- WO 2007013532 A


### Non-patent literature cited in the description


- *Macromolecule,* 1993, vol. 26 (22), 5829-5834
- Shin Jikken Kagaku Kouza (New Experimental Chemistry) 19 Kobunshi Kagaku (Polymer Chemistry) II. Maruzen Company, 607-611